# EUROPÄISCHE PATENTSCHRIFT

(11) **EP 1 762 131 B1**
(45) Veröffentlichungstag und Bekanntmachung des Hinweises auf die Patenterteilung: **20.08.2008**
(21) Anmeldenummer: 06007678.3
(22) Anmeldetag: 12.04.2006
(51) Int. Cl.: A01D 34/86

(54) **Mäh- und/oder Schneidgerät**
Mowing and/or cutting device
Appareil à faucher et/ou couper

(30) Priorität: 22.04.2005 DE 202005006541 U; 22.04.2005 DE 102005018987; 22.04.2005 DE 202005006539 U; 22.04.2005 DE 202005006542 U; 22.04.2005 DE 202005006540 U
(43) Veröffentlichungstag der Anmeldung: 14.03.2007
(73) Patentinhaber: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse, Harald F.W.

(56) Entgegenhaltungen:
- DE-A1- 3 709 681
- DE-A1- 19 623 391
- DE-U1- 20 211 861
- US-A- 4 873 818

## Beschreibung

Die Erfindung betrifft cin Mäh- und/odcr Schneidgerät mit zumindest einem front- oder heckseitig an einem Fahrzeug halterbaren und gegenüber diesem quer beweglichen Ausleger nach dem Oberbegriff des Anspruchs 1 (siehe z.B. DE-A-19 623 391).

Bei solchen Mäh- und/oder Schneidgeräten ist es bekannt, den Ausleger insgesamt quer zum Fahrzeug beweglich zu halten, um ihn damit zwischen einer ausgreifenden Arbeitsstellung und einer zum Beispiel vor dem Fahrzeug eingefalteten Transportstellung oder zwischen zwei zu unterschiedlichen Seiten ausgreifenden Arbeitsstellungen verlagern oder ihn während des Ausgreifens zu einer Seite unterschiedlich weit ausschieben zu können.

Dabei ist der Ausleger mit einer ihn tragenden Halterung insgesamt an quer zum Fahrzeug erstreckten Führungsschienen, die die Halterung des Auslegers abstützen, motorisch und fernbetätigt verlagerbar.

Hierfür wird ein Motor verwendet, der einerseits kompakt und nicht zu schwer sein soll, andererseits jedoch mit der schweren zu bewegenden Einheit dann ein ruckelndes Anfahrverhalten und eine geringe Präzision bei der Querverschiebung zeigt. Eine Toleranz von mehreren Zentimetern muß daher bei jeder Verschiebung einkalkuliert werden. Zudem benötigt der Motor erheblichen Bauraum.

Der Erfindung liegt das Problem zugrunde, eine verbesserte Querverschiebemöglichkeit für den Ausleger bei einem Mäh- und/oder Schneidgerät der genannten Art zu schaffen.

Die Erfindung löst dieses Problem durch ein Mäh- und/oder Schneidgerät mit den Merkmalen des Anspruchs 1. Hinsichtlich vorteilhafter Ausgestaltungen wird auf die abhängigen Ansprüche 2 bis 7 verwiesen.

Erfindungsgemäß ist mit dem Hydraulikantrieb ein sanft anfahrender und exakt zu stoppender Antrieb geschaffen, dcr insbesondere vorteilhaft raumsparend horizontal liegen und dem Fahrzeug zugeordnet sein kann, also selbst nicht mitbewegt werden muß.

Sehr günstig umfaßt der Hydraulikantrieb zumindest einen quer zum Fahrzeug und parallel zur Verschiebungsebene des Auslegers gelegenen schmalen Hydraulikzylinder, der auf diese Weise mit seiner Langerstreckung den Führungsschienen für die Querverschiebung folgt und zum Beispiel unterhalb von diesen geschützt und dennoch gleichzeitig gut zugänglich für Wartungszwecke gehalten sein kann.

Weil der Hydraulikantrieb über zwei an den äußeren Enden einer Querführungsbahn für einen den Ausleger haltenden Läufer umgelenkte Zugglieder auf den Läufer einwirkt, können diese Zugglieder ebenfalls mehr oder weniger parallel zu den Führungsschienen und somit raumsparend und verdeckt liegen. Durch eine leichte Schrägführung der Zugglieder läßt sich zusätzlich der in Fahrzeuglängsrichtung benötigte Bauraum vermindcrn,

Die Zugglieder können dabei bewährt und mit wenig Eigengewicht durch Seile, Riemen oder Ketten gebildet sein, die anders als ein Gestänge auch gegen Verformung, zum Beispiel durch Bordsteine oder andere feste oder aufgewirbelte Hindernisse, unempfindlich sind und zusätzlich vorteilhaft eine Spannungsregulierung ermöglichen, insbesondere um auch nach einiger Betriebsdauer eine Lose in den Zuggliedern ausgleichen zu können.

Wenn die Zugglieder an dem Läufer enden und diesem die Nachstellmöglichkeiten zugeordnet sind, können sie einfach von außen zugänglich sein und beispielsweise über übliches Handwerkzeug, wie Schraubenschlüssel, zu betätigen sein.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Ansicht von vorne eines erfindungsgemäßen Mäh- und/oder Schneidgeräts mit einer frontseitig an einem Fahrzeug angeordneten Mähvorrichtung in Arbeitsstellung mit ein Hindernis übergreifendem Ausleger,
- Fig. 2: eine ähnliche Ansicht wie Fig. 1 mit einem quer vor dem. Fahrzeug in einer Transportstellung gehaltenen Ausleger,

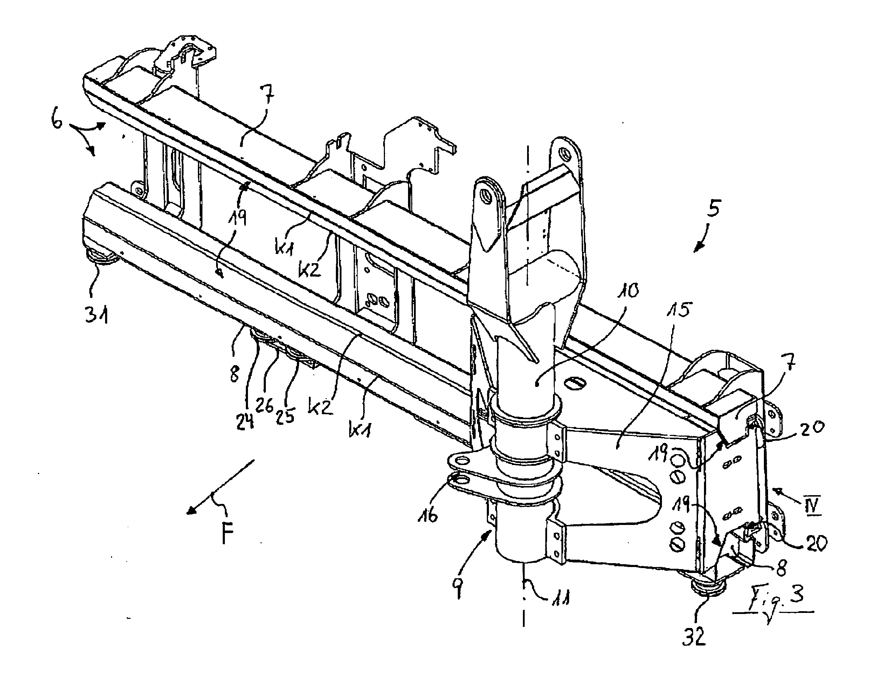

- Fig. 3: eine perspektivische Einzelteildarstellung des Trägers mit zwei übereinander liegenden Führungsschienen und daran beweglich abgestützter Halterung für die Querverschiebung des Auslegers,
- Fig.4: eine Seitenansicht des Trägers mit an den Führungsschienen, abgestütztem Läufer und Halterung für den Ausleger, etwa entsprechend einer Ansicht in Richtung des Pfeils IV in Fig. 3 vor Montage der Zugglieder,

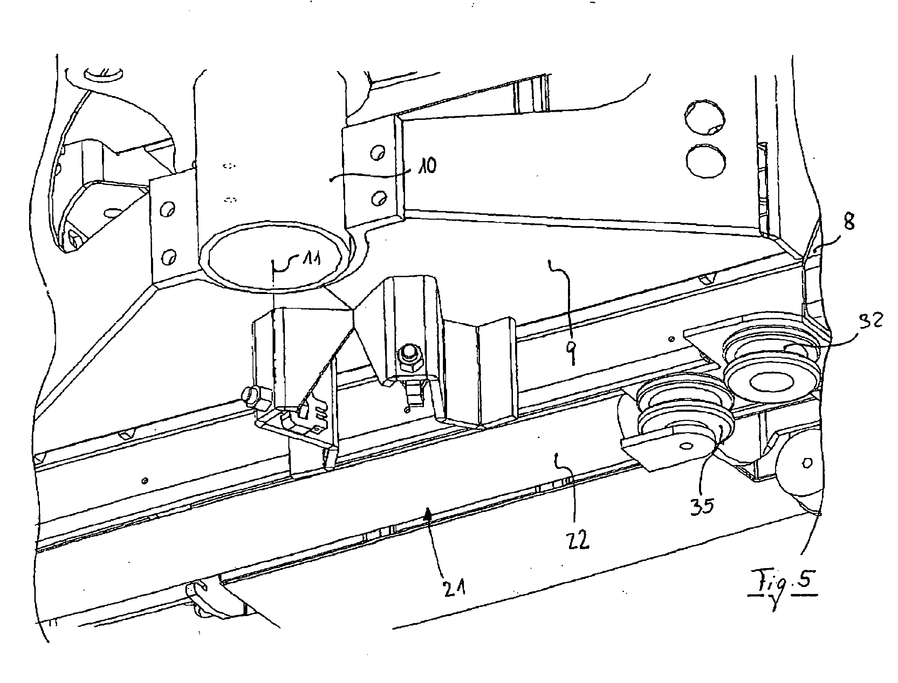

- Fig. 5: eine abgebrochene Detailansicht des unteren Endes des Trägers mit entsprechend Figur 3 am linken Ende der Führungsschienen stehendem Läufer vor Montage der Zugglieder,
- Fig. 6: eine schematische Ansicht des Trägers von unten mit bezüglich der Fahrtrichtung rechts befindlichem Läufer vor Montage der Halterung für den Ausleger,
- Fig. 7: eine ähnliche Ansicht wie Fig. 6 des Trägers von unten, jedoch mit bezüglich der Fahrtrichtung links befindlichem Läufer,
- Fig. 8: eine schematische Ansicht wie Fig. 6 des Trägers von unten, jedoch mit in einer Zwischenstellung befindlichem Läufer.

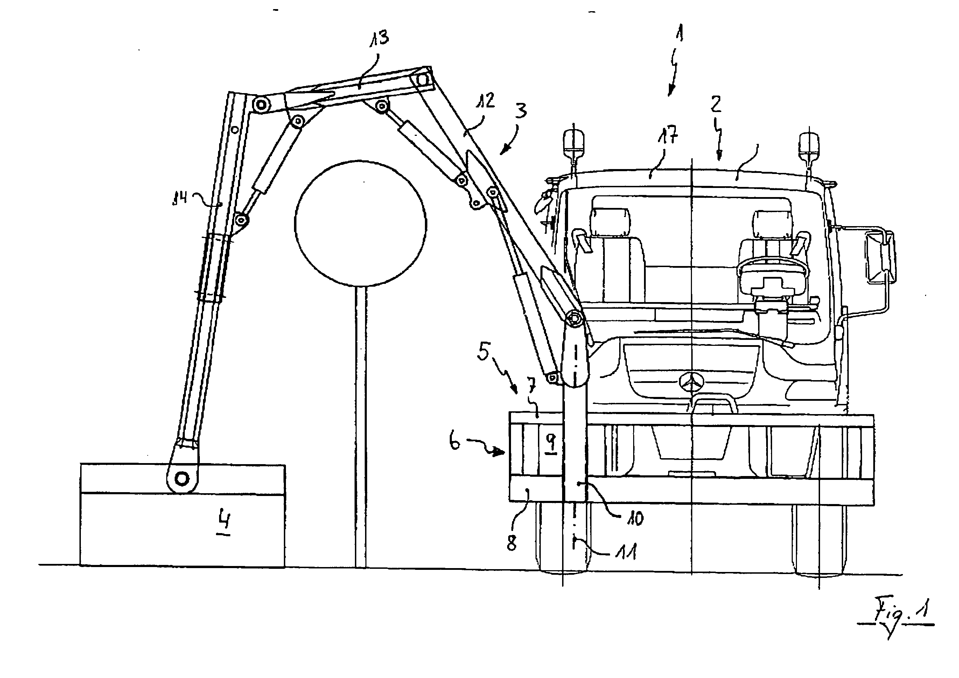

Das in Figur 1 dargestellte und insgesamt mit 1 bezeichnete Mäh- und/oder Schneidgerät umfaßt ein hier selbstfahrendes Fahrzeug 2, was nicht zwingend ist, einen mehrteiligen Ausleger 3 und zumindest einen Arbeitskopf 4, der beispielsweise als Mäh-, Schneid- oder Fräskopf oder als Räum- oder Reinigungskopf ausgebildet sein kann. Er kann mit Schneid- und/oder Schlagmitteln versehen sein. Neben Grasmähköpfen mit einer oder mehreren vertikal oder horizontal rotierenden Schneid- oder Schlagwalzen ist so beispielsweise auch eine reine Heckenschere oder dergleichen montierbar. Neben der hier gezeigten Frontmontage des Auslegers 3 kommt zusätzlich oder alternativ auch eine Montage auf der Ladefläche oder eine Heckmontage eines Auslegers 3 in Betracht.

Der Ausleger 3 ist an einem fahrzeugfesten Träger 5 montiert, der eine Querführungseinrichtung 6 mit hier zwei vertikal oder nahezu vertikal beabstandet zueinander angeordneten und quer zum Fahrzeug 2 verlaufenden Führungsschienen 7, 8, hier Horizontalprofilen, und einen daran zumindest quer zum Fahrzeug 2 verschieblichen Läufer 9 umfaßt.

Der Läufer 9 trägt für den Ausleger 3 eine aufragende Halterung 10 mit einer vertikalen Schwenkachse 11, um die herum der Ausleger 3 schwenkbar ist.

Das Fahrzeug 2 kann als Schmalspurtraktor ausgebildet sein, um damit einen flexiblen Einsatz auch in engen Bereichen zü ermöglichen. Auch größere, LKW-ähnliche Fahrzeuge sind möglich. Zudem kann die Arbeitsposition des Arbeitslsopfes 4 von rechts auf links variiert werden.

Der Ausleger 3 umfaßt hier beispielhaft drei Abschnitte 12, 13, 14, von denen der mittlere Abschnitt 13 der kürzeste ist, so daß auch ein Hindernis, wie in Fig. 1 dargestellt, durch eine portalartige Stellung des Auslegers 3 übergriffen werden kann.

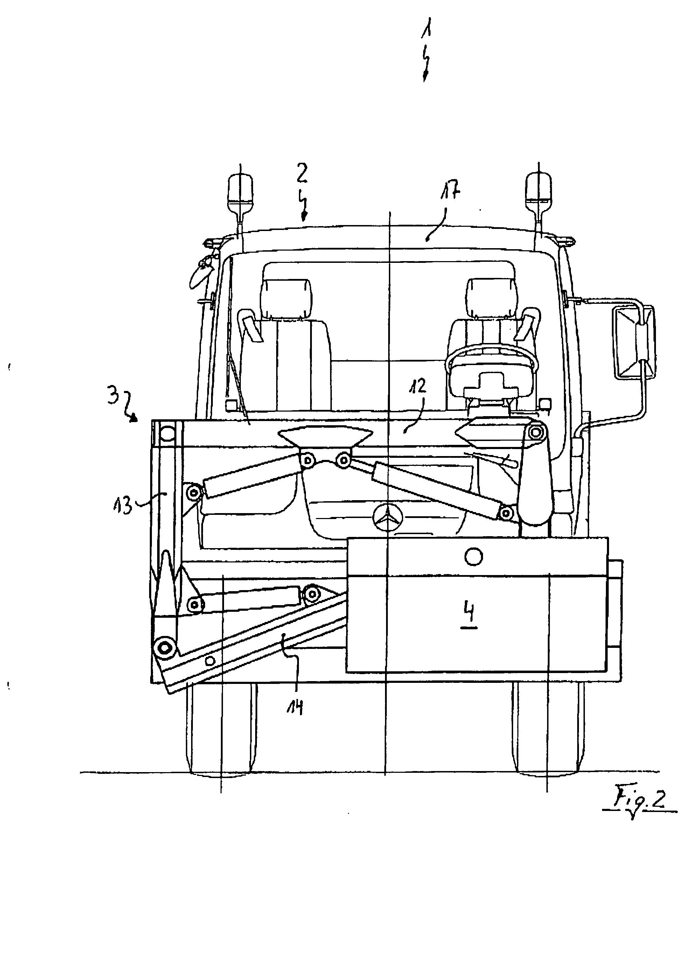

In der in Figur 2 gezeigten Quertranspoxtstellung ist der Ausleger 3 quer vor - oder hinter (nicht dargestellt) - dem Fahrzeug 2 derart halterbar, daß der erste Abschnitt 12 als oberster Teil des Auslegers 3 etwa an der Unterkante einer Windschutzscheibe quer zum Fahrzeug 2 liegt, der zweite Abschnitt 13 zumindest nahezu vertikal abwärts weist, was aufgrund seiner geringen Länge möglich ist, und der dritte Abschnitt 14 in eingefahrener Stellung schräg aufwärts mit einer dem ersten Abschnitt entgegengesetzten Querkomponente verläuft. Das Packmaß ist daher minimiert, die Breite gering. Der Arbeitskopf 4 kann so horizontal und weit unten gehalten werden, dem Fahrer bleibt dadurch ein optimiertes Sichtfeld. Alternativ kann in einer Längstransportstellung von dem Ausleger 3 das Führerhaus 17 übergriffen und der Arbeitskopf 4 auf einer Ladefläche abgelegt sein.

Es versteht sich, daß verschiedenste Auslegertypen von dem mit einer Komponente quer zum Fahrzeug 2 verlagerbaren Läufer 9 abgestützt sein können.

Die Führungsschienen 7, 8 der Querführungseinrichtung 6 sind hier jeweils als Kastenprofile aus einem vergüteten Stahl ausgebildet und umfassen mehrere parallel und längs zur Erstreckung der Profile 7, 8 verlaufende Kanten, unter anderem die Kanten K1, K2. Zwischen diesen ist hier sowohl an dem oberen 7 wie auch an dem unteren Führungsprofil 8 jeweils eine mit einer Komponente in Fahrtrichtung F weisende Schrägfläche 19 ausgebildet, wohingegen sich auf der der Fahrtrichtung F entgegengerichteten Seite jeweils eine Vertikalfläche 20 zwischen hinteren Kanten befindet.

Zwischen den Profilen 7 und 8 ist der Läufer 9 derart verschieblich halterbar, daß er mit einer Komponente von unten an der oberen Führungsschiene 7 und mit eine Komponente von oben an der unteren Führungsschiene 8 angreift und so an diesen abgestützt ist. Der Läufer 9 ist hierbei als Schlitten ausgebildet, also gleitbeweglich entlang den Führungshilfen 7, 8. Auch eine Bewegung über Rollen wäre prinzipiell möglich.

Für die Querbewegung des an der Halterung 10 abgestützten Auslegers 3 ist ein Hydraulikantrieb 21 vorgesehen, der hier genau einen horizontal und quer zum Fahrzeug, somit parallel zu Verschiebungsebene des Auslegers 3, angeordneten Hydraulikzylinder 22 umfaßt. Dieser kann geschützt in einer Ebene unterhalb des Trägers 5 parallel zur unteren Führungsschiene 8 liegen.

Der Hydraulikzylinder 22 ist karosseriefest gehalten und bewegt durch Ein- oder Ausfahren seiner Kolbenstange 23 einen mit zwei quer zur Fahrtrichtung F verschiebbaren Rollen 24, 25 versehenen Antriebskopf 26. Über dessen Rollen 24, 25 sind zwei Zugglieder 27, 28 bewegbar, die mit jeweils einem Ende 29, 30 fest an die Karosserie angebunden sind, dann die Rollen 24, 25 umlaufen und von dort aus sich weiter über Umlenkrollen 31, 32 an den äußeren Enden der Querführungsbahn zu dem den Ausleger 3 haltenden Läufer 9 erstrecken. Mit diesem sind sie an Anbindungen 33, 34 verbunden. Durch Bewegung der Kolbenstange 23 bewirken somit die Zugglieder 27; 28 die Querverschiebung des Läufers 9 und damit des Auslegers 3.

Eine zusätzliche Führungsrolle 35 am karosserieseitigen, kolbenbodenseitigen Ende des Hydraulikzylinders 22 lenkt das Zugglied 28 in eine Schrägstellung leicht entgegen der Fahrtrichtung F um, ebenso ist auf der gegenüberliegenden Querseite eine Schrägführung des Zugglieds 27 zwischen der Rolle 24 und der äußeren Umlenkrolle 31 ermöglicht. Dadurch braucht der Antrieb 21 insgesamt nur eine sehr geringe Erstreckung in Fahrzeuglängsrichtung und ragt nur wenig nach vorne über die Führungsschiene 8 hinaus. Er ist somit außerordentlich raumsparend.

Beide Zugglieder 27, 28 sind hier durch (Stahl-) Seile oder Ketten gebildet, was eine zuverlässige und gewichtsoptimierte Funktion gewährleistet und ermöglicht ist, da die Zugglieder 27, 28 nicht auch eine Schubfunktion ausüben müssen. Alternativ wäre auch ein Gestänge zur Übertragung von Zug- und Schubkräften möglich, Die Zugglieder 27, 28 sind einfach auswechselbar.

Die Spannung der Zugglieder 27, 28 ist zudem nachstellbar, wozu bevorzugt an den Anbindungen 33, 34 am Läufer 9 gut zugängliche Spanneinrichtungen vorgesehen sind, zum Beispiel von außen mit Schraubenschlüsseln nachziehbare Spannschrauben.

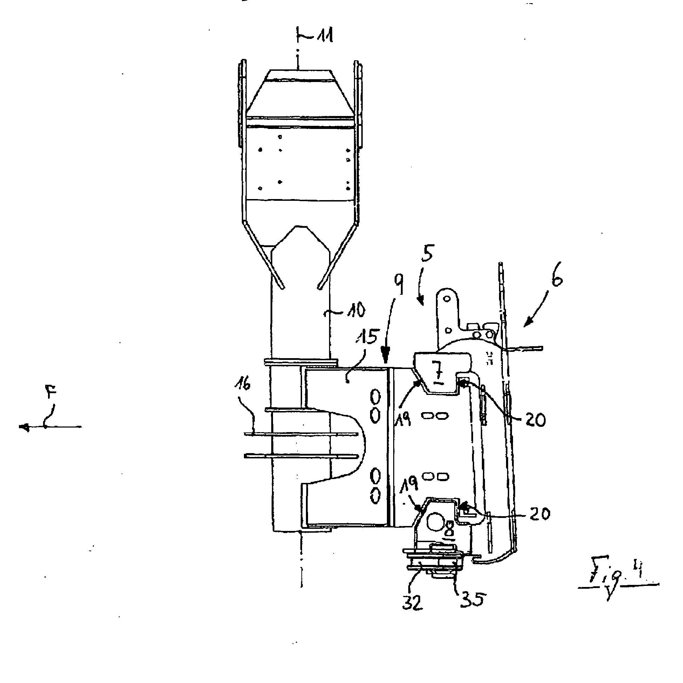

Der vertikal hoch erstreckte Läufer 9 umfaßt zudem einen Schutzkäfig 15 (Fig. 4), in dem ein Antriebsorgan - nicht dargestellt - für das Verschwenken des Auslegers 3 um die Schwenkachse 11 der Halterung 10 geschützt gelegen sein und an den Ansätzen 16 des Auslegers 3 für seine Drchung um diese Achse 11 angreifen kann.

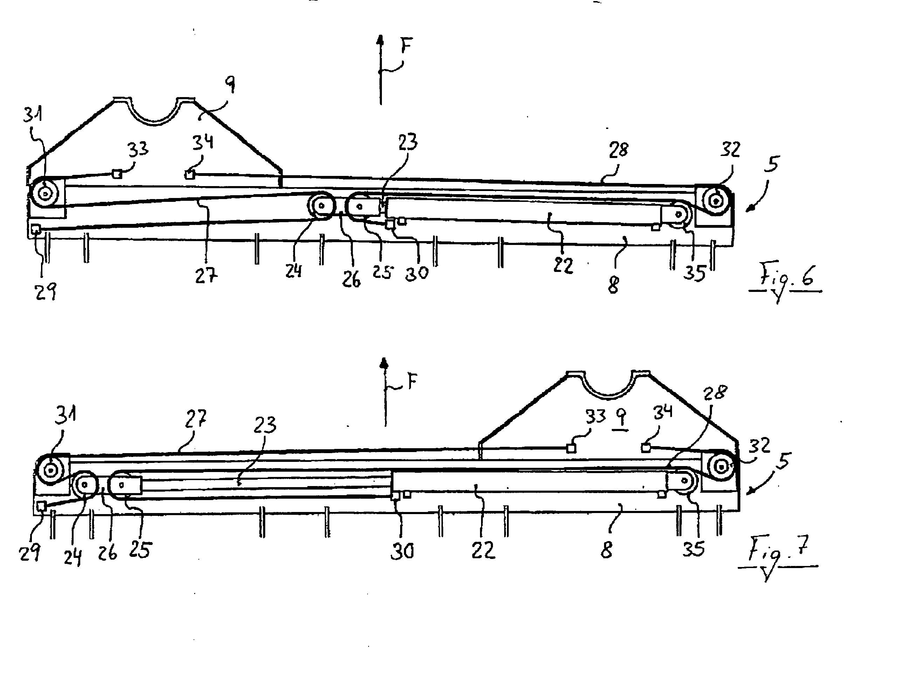

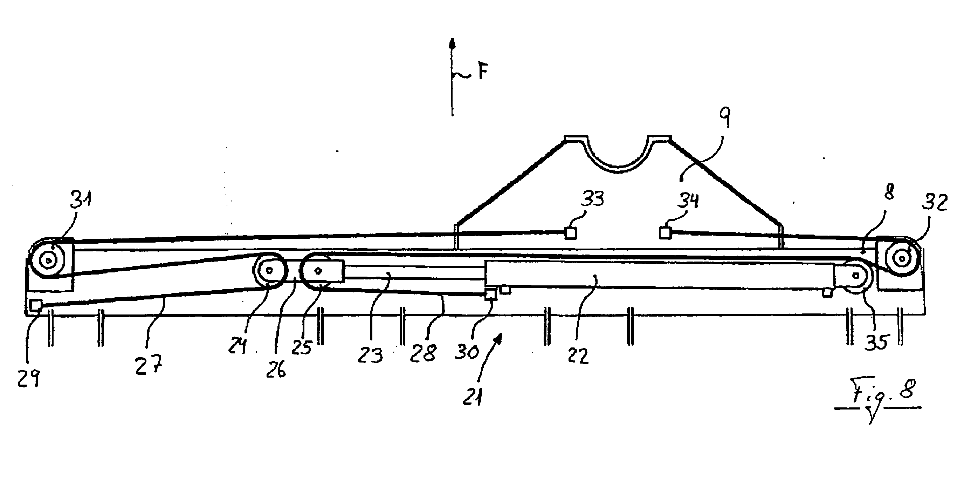

Um den Läufer 9 aus seiner in Fahrtrichtung F rechten Extremalstellung (Fig. 6) in die linke Extremalstellung (Fig, 7) zu vcrschieben, wird die Kolbenstange 23 des hier links angeordneten Zylinders 22 ausgefahren, wodurch über die Umlenkrolle 25 eine Zugkraft auf das Zugseil 28 übertragen wird, das über seine Umlcnkungen 35, 32 und die Anbindung 34 dann den Läufer 9 bezüglich der Fahrtrichtung F nach links zieht (Fig. 8). Das andere Zugseil 27 wird dabei von dem Läufer 9 selbst stramm gehalten und nachgezogen. Die erforderliche Länge zum Nachziehen des Seils 27 ergibt sich dabei durch den Ausschub der Kolbenstange 23, mit der die Rolle 24 nach rechts verschoben wird und damit die zwischen karosserieseitige Anbindung 29, Rolle 24 und Umlenkrolle 31 benötigte Seillänge vermindert.

Der Hydraulikzylinder 21 kann stufenlos an jeder Stelle der Bewegung gestoppt und gehalten werden, so daß sich eine minimale Toleranz für die Querverschiebung von wenigen Millimetern ergibt. Hohe Anlaufströme oder andere Anfahrrucke des Antriebs 21 treten nicht auf.

### Bezugszeichenliste:

- 1: Mäh- und oder Schneidgerät,
- 2: Fahrzeug,
- 3: Ausleger,
- 4: Arbeitskopf,
- 5: Träger,
- 6: Querführungseinrichtung,
- 7: obere Führungsschiene,
- 8: untere Führungsschiene,
- 9: Läufer,
- 10: Halterung,
- 11: Schwenkachse,
- 12: erster Abschnitt,
- 13: zweiter Abschnitt,
- 14: dritter Abschnitt,
- 15: Schutzkäfig,
- 16: Ansätze,
- 17: Führerhaus,

- 19: Schrägfläche,
- 20: Vertikalfläche,
- 21: Hydraulikantrieb,
- 22: Hydraulikzylinder,
- 23: Kolbenstange,
- 24: Rolle,
- 25: Rolle,
- 26: Antriebskopf,
- 27: Zugglied,
- 28: Zugglied,
- 29: Anbindung,
- 30: Anbindung,
- 31: Umlenkrolle,
- 32: Umlenkrolle,
- 33: Anbindung,
- 34: Anbindung,
- 35: Rolle
- K1, K2: Kanten,
- F: Fahrtrichtung

## Patentansprüche

1. Mäh- und/oder Schneidgerät (1) mit zumindest einem front-oder heckseitig an einem Fahrzeug (2) halterbaren und gegenüber diesem quer beweglichen Ausleger (3), der in einer Betriebsstellung auswärts erstreckt ist und zumindest einen Arbeitskopf (4) trägt, wobei zur Querbewegung des Auslegers (3) ein Hydraulikantrieb (21) vorgesehen ist,
**dadurch gekennzeichnet,**
**daß** der Hydraulikantrieb (21) über zwei an den äußeren Enden einer Querführungsbahn für einen den Ausleger (3) haltenden Läufer (9) umgelenkte (31;32) Zugglieder (27;28) auf den Läufer (9) einwirkt.

2. Mäh- und/oder Schneidgerät nach Anspruch 1,
**dadurch gekennzeichnet,**
**daß** der Hydraulikantrieb (21) zumindest einen quer zum Fahrzeug (2) und parallel zur Verschiebungsebene des Auslegers (3) gelegenen Hydraulikzylinder (21) umfaßt.

3. Mäh- und/oder Schneidgerät (1) nach einem der Ansprüche 1 oder 2,
**dadurch gekennzeichnet,**
**daß** die Zugglieder (27;28) durch Seile, Riemen oder Ketten gebildet sind.

4. Mäh- und/oder Schneidgerät (1) nach einem der Ansprüche 1 bis 3,
**dadurch gekennzeichnet,**
**daß** die Spannung der Zugglieder (27,28) nachstellbar ist.

5. Mäh- und/oder Schneidgerät nach Anspruch 4,
**dadurch gekennzeichnet,**
**daß** die Zugglieder (27;28) an dem Läufer (9) enden (33;34) und diesem die Nachstellmöglichkeiten zugeordnet sind.

6. Mäh- und/oder Schneidgerät nach einem der Ansprüche 1 bis 5,
**dadurch gekennzeichnet,**
**daß** der Hydraulikantrieb (21) fahrzeugfest abgestützt ist.

7. Mäh- und/oder Schneidgerät nach einem der Ansprüche 1 bis 6,
**dadurch gekennzeichnet,**
**daß** der Läufer (9) einen Schutzkäfig (15) zur Aufnahme von zumindest einem Antriebsorgan (16) für eine Schwenkbewegung des Auslegers (3) um eine vertikale Achse (11) umfaßt.

## Claims

1. A mowing and/or cutting device (1) with at least one boom (3) which is capable of being held on a vehicle (2) at the front or the rear and is movable transversely with respect to the said vehicle (2) and which extends outwards in an operative position and carries at least one operating head (4), wherein an hydraulic drive (21) is provided for the transverse movement of the boom (3), **characterized in that** the hydraulic drive (21) acts upon a running means (9) - holding the boom (3) - by way of two traction members (27; 28) which are articulated (31; 32) at the outer ends of a transverse guide path for the running means (9).

2. A mowing and/or cutting device according to Claim 1, **characterized in that the** hydraulic drive (21) comprises at least one hydraulic cylinder (21) arranged transversely to the vehicle (2) and parallel to the displacement plane of the boom (3).

3. A mowing and/or cutting device (1) according to one of Claims 1 or 2, **characterized in that** the traction members (27; 28) are formed by cables, belts or chains.

4. A mowing and/or cutting device (1) according to any one of Claims 1 to 3, **characterized in that** the tensioning of the traction members (27, 28) is capable of being readjusted.

5. A mowing and/or cutting device according to Claim 4, **characterized in that** the traction members (27; 28) terminate (33; 34) on the running means (9) and the said running means (9) has correlated with it the possibilities of re-adjustment.

6. A mowing and/or cutting device according to any one of Claims 1 to 5, **characterized in that** the hydraulic drive (21) is supported in a manner fixed with respect to the vehicle.

7. A mowing and/or cutting device according to any one of Claims 1 to 6, **characterized in that** the running means (9) comprises a protective cage (15) for receiving at least one driving member (16) for a pivoting movement of the boom (3) about a vertical axis (11).

## Revendications

1. Dispositif de fauchage et/ou de coupe (1) avec au moins un bras en porte-à-faux (3) à fixer à l'avant ou à l'arrière d'un véhicule (2) et mobile transversalement à celui-ci, qui s'étend vers l'extérieur dans une position de fonctionnement et porte au moins une tête de travail (4), un dispositif d'entraînement hydraulique (21) étant prévu pour le mouvement transversal du bras en porte-à-faux (3),
**caractérisé**
**en ce que** le dispositif d'entraînement hydraulique (21) agit sur un chariot (9), par deux organes de traction (27 ; 28) déviés (31 ; 32) aux extrémités extérieures d'une voie de guidage transversale pour le chariot (9) maintenant le bras en porte-à-faux (3).

2. Dispositif de fauchage et/ou de coupe selon la revendication 1,
**caractérisé**
**en ce que** le dispositif d'entraînement hydraulique (21) comprend au moins un vérin hydraulique (21) placé transversalement au véhicule (2) et parallèlement au plan de déplacement du bras en porte-à-faux (3).

3. Dispositif de fauchage et/ou de coupe (1) selon l'une quelconque des revendications 1 ou 2,
**caractérisé**
**en ce que** les organes de traction (27 ; 28) sont formés par des câbles, des courroies ou des chaînes.

4. Dispositif de fauchage et/ou de coupe (1) selon l'une quelconque des revendications 1 à 3,
**caractérisé**
**en ce que** la tension des organes de traction (27, 28) peut être rectifiée.

5. Dispositif de fauchage et/ou de coupe selon la revendication 4,
**caractérisé**
**en ce que** les organes de traction (27 ; 28) se terminent (33 ; 34) sur le chariot (9) et à celui-ci sont associées les possibilités de rectification.

6. Dispositif de fauchage et/ou de coupe selon l'une quelconque des revendications 1 à 5,
**caractérisé**
**en ce que** le dispositif d'entraînement hydraulique (21) est soutenu solidairement avec le véhicule.

7. Dispositif de fauchage et/ou de coupe selon l'une quelconque des revendications 1 à 6,
**caractérisé**
**en ce que** le chariot (9) comprend une cage de protection (15) pour recevoir au moins un organe d'entraînement (16) pour un mouvement de pivotement du bras en porte-à-faux (3) autour d'un axe vertical (11).
